# EUROPÄISCHE PATENTANMELDUNG

(11) **EP 1 209 331 A2**
(43) Veröffentlichungstag der Anmeldung: **29.05.2002**
(21) Anmeldenummer: 01125685.6
(22) Anmeldetag: 26.10.2001
(51) Int. Cl.: F01N 3/20, F01N 3/38, F01N 3/36

(54) **Verfahren zur Zufuhr von Brennstoff und/oder thermischer Energie in einem Gasstrom**

(30) Priorität: 09.11.2000 DE 10055613
(71) Anmelder: XCELLSIS GmbH, 73230 Kirchheim/Teck-Nabern (DE)
(72) Erfinder: Boneberg, Stefan, 72660 Beuren (DE); Schonert, Michael, 70374 Stuttgart (DE); Höger, Thomas, 73230 Kirchheim (DE)
(74) Vertreter: Kaufmann, Ursula Josefine, Dr.rer.nat. Dipl.-Phys.

(57) **Zusammenfassung**

Ein Verfahren dient zur Zufuhr von Brennstoff und/oder thermischer Energie in einen zu einem katalytischen Reaktor strömenden Gasstrom. Der Gasstrom durchströmt zu einem Teil eine Außenkammer und zu einem Teil eine dazu in Richtung der Strömung zumindest teilweise offen ausgebildete Innenkammer, welcher ein Brennstoff zugeführt wird. Die Teilströme wiedervereinigen sich nach dem Durchströmen der beiden Kammern und werden dem katalytischen Reaktor zugeführt. In einer Startphase des noch kalten katalytischen Reaktors wird in der Innenkammer der Brennstoff verbrannt. Bei bestimmungsgemäßem Normalbetrieb des warmen katalytischen Reaktors wird der Brennstoff in der Innenkammer verdampft. In einer geeigneten Vorrichtung sind die Außenkammer und die Innenkammer als zwei ineinander angeordnete Rohrelemente ausgebildet.

## Beschreibung

Die Erfindung betrifft ein Verfahren zur Zufuhr von Brennstoff und/oder thermischer Energie in einen zu einem katalytischen Reaktor strömenden Gasstrom. Außerdem betrifft die Erfindung eine Vorrichtung zur Durchführung des Verfahrens.

Die Versorgung von katalytischen Reaktoren, beispielsweise Heizkatalysatoren in einem Abgasstrang oder katalytischen Brennern im Bereich eines Gaserzeugungssystems zur Erzeugung von wasserstoffhaltigem Gas für eine Brennstoffzellenanlage, müssen insbesondere in ihrer Startphase mit thermischer Energie versorgt werden, um eine entsprechende Starttemperatur, insbesondere bei mobilen Anwendungsfällen, schnellstmöglich zu erreichen.

Dafür wird den katalytischen Reaktoren im allgemeinen thermische Energie, welche beispielsweise bei einer Verbrennung oder dergleichen entsteht, zugeführt und/oder es erfolgt die direkte Zufuhr eines Brennstoffs, welche sowohl während der Startphase als auch während des normalen Betriebs, also bei auf Betriebstemperatur befindlichem katalytischen Reaktor, erfolgen kann und in dem Reaktor thermische Energie freisetzt.

Der Erfindung liegt nun die Aufgabe zugrunde, ein Verfahren der oben genannten Art zu schaffen, welches die Zufuhr von Brennstoff und/oder thermischer Energie in einen zu dem katalytischen Reaktor strömenden Gasstrom bezüglich seines Steuerungsaufwands und seines Vorrichtungsbedarfs sehr einfach, robust und in platzsparender Art und Weise ermöglicht.

Erfindungsgemäß wird diese Aufgabe durch das Verfahren mit den im Anspruch 1 genannten Merkmalen gelöst. Eine alternative Lösung ist durch das Verfahren mit den in Anspruch 5 genannten Merkmalen angegeben. Eine erfindungsgemäße Vorrichtung zur Durchführung dieses Verfahrens wird durch den kennzeichnenden Teil des Anspruchs 16 beschrieben.

Das Verfahren weist den besonderen Vorteil auf, daß der zu dem katalytischen Reaktor strömende Gasstrom, beispielsweise Luft, welche zu dem katalytischen Brenner strömt, oder beispielsweise das Abgas einer Brennkraftmaschine, welches nach der Startphase der Brennkraftmaschine als noch kaltes und sauerstoffhaltiges Abgas zu einem als Heizkatalysator ausgebildeten Abgaskatalysator strömt, durch eine Außenkammer und eine Innenkammer geführt wird. Dabei wird der Innenkammer ein Brennstoff zugeführt, welcher in einer Startphase des noch kalten katalytischen Reaktors verbrannt wird, um mittels der entstehenden heißen Abgase dem katalytischen Reaktor thermische Energie zuzuführen. Das insgesamt zu dem katalytischen Reaktor strömende Gas würde bei einem herkömmlichen Brenneraufbau mit der entsprechend zudosierten Brennstoffmenge kein zündfähiges Gemisch bilden. Dadurch, daß jedoch eine gewisse Gasmenge durch die Außenkammer und eine andere Teilmenge des Gases durch die Innenkammer strömt, kann in der Innenkammer ein zündfähiges Gemisch entstehen, so daß hier eine Verbrennung erfolgen kann, ohne daß die gesamte dem katalytischen Brenner zugeführte Gasmenge zu diesem Zeitpunkt des Betriebs gedrosselt werden müßte.

Außerdem wird durch die Umströmung der Innenkammer mit dem vergleichsweise kalten, durch den Bereich der Außenkammer strömenden Gas eine übermäßige Erwärmung der Außenkammer vermieden, so daß das Bauteil, in welchem das Verfahren stattfindet, ohne weiter thermische Isolierungen oder dergleichen sehr platzsparend und günstig in eine Anlage, z.B. einem Gaserzeugungssystem für eine mobile Brennstoffzellenanlage, eingebaut werden kann.

Im weiteren Verlauf des Verfahrens, nämlich wenn der katalytische Reaktor sein bestimmungsgemäßen Normalbetrieb erreicht hat und bei Betriebstemperatur arbeitet, kann ein gegebenenfalls zum Betrieb des katalytischen Reaktors erforderlicher Brennstoff in der Innenkammer verdampft werden. Die hierfür erforderliche Energie stammt dabei aus dem durch die beiden Kammern strömenden Gasstrom.

In einer besonders günstigen Weiterbildung der Erfindung kann ein Zusatzgasstrom in den Bereich der Außenkammer eingebracht werden, welcher weitere Brennstoffe enthält. Diese Brennstoffe können dann im Bereich der Außenkammer katalytisch verbrannt werden, wobei die entstehende thermische Energie zur Verdampfung des in die Innenkammer eingebrachten Brennstoffs genutzt werden kann.

In einer alternativen Ausführungsform des Verfahrens ist es vorgesehen, daß der in den katalytischen Reaktor einströmende Gasstrom bereits Brennstoffe in sich trägt. Der Gasstrom kann dazu beispielsweise ein sauerstoffarmer Reformat- oder Eduktstrom sein.

Der Gasstrom strömt, wie oben bereits erläutert, durch den Aufbau des Brenners mit Außenkammer und Innenkammer. Lediglich im Bereich der Innenkammer wird nun ein sauerstoffhaltiges Medium, welches gemäß einer besonders günstigen Ausführungsform insbesondere Luft sein kann, zugeführt, so daß in diesem Bereich, welcher wie oben bereits erwähnt, aufgrund seiner geringen Strömungsgeschwindigkeit eine stabile Flamme ermöglicht, eine ebensolche gezündet werden kann. Durch die stabile Flamme in der Innenkammer läßt sich so eine Verbrennung erreichen, welche je nach Anforderungen sowohl überstöchiometrisch als auch unterstöchimetrisch ablaufen kann.

Durch die Vermischung der Flamme mit dem kalten Teil des Gasstroms, welcher durch die Außenkammer strömt, wird eine für den katalytischen Reaktor verträgliche Eintrittstemperatur ermöglicht, welche weit unterhalb der Abgastemperatur der offenen Flamme liegt. Außerdem wird durch das Umströmen des Rohrelements, welches die Innenkammer bilden kann durch den kalten Gasstrom der Wärmeverlust einer derartigen Vorrichtung minimiert. Eine thermische Belastung von benachbarten Komponenten, z.B. beim Einsatz in einem Gaserzeugungssystem, bleibt aus. Ansonsten gelten auch hier die bereits genannten Merkmale analog.

Eine entsprechende Vorrichtung zur Durchführung des beschriebenen Verfahrens ist als Zwei-Rohr-Brenner ausgebildet, wobei die Außenkammer und die Innenkammer durch zwei ineinander angeordnete Rohrelemente gebildet werden. Wie gemäß dem oben beschriebenen erfindungsgemäßen Verfahren gefordert, sind die Rohre in Strömungsrichtung des Gaststroms offen, hier also an den stirnseitigen Enden, so daß der in die Vorrichtung einströmende Gasstrom in Abhängigkeit des Querschnitts der beiden Rohrelemente auf die beiden Kammern aufgeteilt wird.

In einer sehr vorteilhaften Weiterbildung der Vorrichtung kann dabei der der Außenkammer zugewandte Bereich von Wandungen der Innenkammer mehrere deren Oberfläche vergrößernde Bauelemente aufweisen, welche in einer sehr günstigen Weiterbildung außerdem eine katalytische Beschichtung tragen.

Dadurch kann in besonders vorteilhafter Weise erreicht werden, daß in der oben angeführten Weiterbildung des Verfahrens, bei welcher im Bereich der Außenkammer ein zusätzlicher Brennstoff katalytisch verbrannt wird, diese Verbrennung direkt auf dem entsprechenden Bauelement, welches beispielsweise als Finne oder Rippe ausgebildet sein kann, durchgeführt werden kann. Die entstehende thermische Energie wird über Wärmeleitung an die Wandungen der Innenkammer und von dort durch einen Wärmeübergang auf das die Innenkammer durchströmende Gas mit dem entsprechenden zu verdampfenden Brennstoff abgeben.

Weitere vorteilhafte Weiterbildungen des Verfahrens und der zur Durchführung des Verfahrens genutzten Vorrichtung ergeben sich aus den restlichen Unteransprüchen und den anhand der Zeichnung nachfolgend beschriebenen Ausführungsbeispielen.

Es zeigt:
- Fig. 1: einen Zwei-Rohr-Brenner in einer ersten Ausführungsform;
- Fig. 2: einen Zwei-Rohr-Brenner in einer zweiten Ausführungsform;
- Fig. 3: einen Zwei-Rohr-Brenner in einer dritten Ausführungsform;
- Fig. 4: einen Zwei-Rohr-Brenner in einer vierten Ausführungsform;
- Fig. 5: einen Zwei-Rohr-Brenner in einer fünften Ausführungsform;
- Fig. 6: einen Zwei-Rohr-Brenner in einer sechsten Ausführungsform;
- Fig. 7: einen Zwei-Rohr-Brenner in einer siebten Ausführungsform;
- Fig. 8: einen Zwei-Rohr-Brenner in einer achten Ausführungsform;
- Fig. 9: einen Zwei-Rohr-Brenner in einer neunten Ausführungsform; und
- Fig. 10: einen Zwei-Rohr-Brenner gemäß Fig. 2 in einem alternativen Betriebsverfahren.

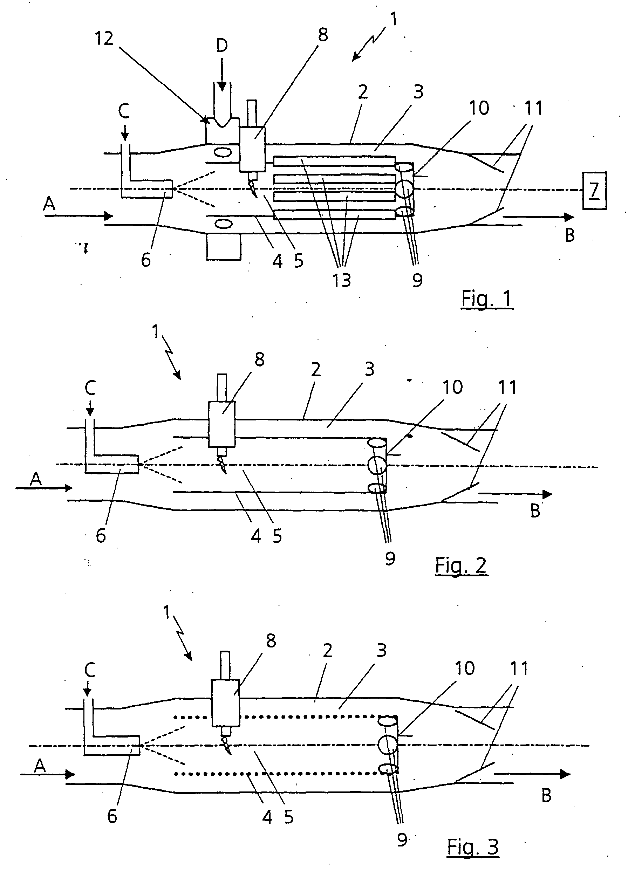

Fig. 1 zeigt einen bevorzugten Aufbau der Vorrichtung zur Durchführung eines Verfahrens zur Zufuhr von thermischer Energie und/oder Brennstoff in einen Gasstrom, in einer bevorzugten Ausführungsform als Zwei-Rohr-Brenner 1. Von einem äußeren Rohrelement 2 wird eine Außenkammer 3 gebildet, in welcher ein inneres Rohrelement 4 angeordnet ist, welches eine Innenkammer 5 bildet. Die beiden Rohrelemente 2, 4 sind dabei jeweils in Strömungsrichtung von einströmender Luft A bzw. abströmendem Gemisch B aus Luft und Abgas, also an ihren jeweiligen Stirnseiten, zumindest teilweise offen ausgebildet.

Die gemäß dem Ausführungsbeispiel einströmende Luft A, im allgemeinen kann dies jedoch ein beliebiger Gasstrom sein, gelangt damit teilweise in den Bereich der Außenkammer 3 und zu einem anderen Teil in den Bereich der Innenkammer 5. Über eine Zerstäubungseinrichtung 6 wird ein Brennstoff C, hier beispielsweise Methanol, eingebracht, welcher dann fein verteilt in den Bereich der Innenkammer 5 gelangt.

Wird die hier prinzipmäßig als Zwei-Rohr-Brenner 1 angedeutete Vorrichtung als Brenner, beispielsweise in der Startphase eines hier nur angedeuteten katalytischen Reaktors 7, genutzt, so wird das sich in der Innenkammer 5 befindliche Gemisch aus Methanol und Luft über eine Zündeinrichtung 8 gezündet. In dem Bereich der Innenkammer 5 findet dann eine Verbrennung, hier insbesondere eine Flammverbrennung, statt, deren Abgase durch den Austrittsquerschnitt der Innenkammer 5 verengende Ausnehmungen 9 in dem in Strömungsrichtung dem katalytischen Reaktor 7 zugewandten Bereich des inneren Rohrelements 4, welches an seiner Stirnseite 10 entsprechend geschlossen ausgebildet sein kann, in den in der Außenkammer 3 strömenden Teil des Luftstroms abgegeben und mit diesem vermischt werden. Im weiteren Verlauf der Strömung des Gemisches B aus Luft und Abgas sind hier prinzipmäßig angedeutete statische Mischelemente 11 angeordnet, so daß ein stark erwärmtes, relativ homogenes Gemisch B aus Luft und Abgas durch den noch kalten katalytischen Reaktor 7 strömt, um ihn aufzuheizen.

Die Verbrennung des Brennstoffs C muß dabei nicht ausschließlich im Bereich der Innenkammer 5 stattfinden, sondern es ist auch denkbar, daß durch die Ausnehmungen 9 brennende Bestandteile austreten, welche dann in dem sich unmittelbar an die Ausnehmungen 9 anschließenden Bereich der Außenkammer 3 zusammen mit dem dort anströmenden Teil des Luftstroms nachverbrennen.

Die Verbrennung des Luft- und Brennstoffgemisches in der Innenkammer 5 läßt sich bei einem derartigen Aufbau des Zwei-Rohr-Brenners 1 sehr günstig gestalten, da hier eine sehr große Menge an Luft A zu dem katalytischen Reaktor 7 geleitet werden kann, also praktisch keine Regelung der zugeführten Luftmenge A oder zumindest keine Drosselung der zugeführten Luftmenge A während des Aufheizens des katalytischen Reaktors 7 erforderlich ist. Dies ist möglich, da hier nur ein Teil des Luftstroms in den Bereich der Innenkammer 5 gelangt und mit dem zudosierten Brennstoff C ein entsprechendes Gemisch entsteht, welches einerseits zündfähig ist und andererseits die geeigneten Bedingungen für die gewünschte Art der Verbrennung mitbringt.

Der Zwei-Rohr-Brenner 1 wird an seiner Außenseite relativ kühl bleiben, da der Bereich der Innenkammer 5, in welchem der wenigstens annähernd größte Teil der Verbrennung stattfindet, von dem durch die Außenkammer 3 strömenden Teil des Luftstroms A gegenüber umgebenden Komponenten abgeschirmt wird, so daß hier nur eine vergleichsweise niedrige Wärmeabgabe an die Umgebung stattfindet. Dies ist einerseits günstig bezüglich des thermischen Wirkungsgrades, da vergleichsweise wenig Wärme als Verlustwärme an die Umgebung abgegeben wird, andererseits ergeben sich hierdurch bezüglich des Einbaus des Zwei-Rohr-Brenners 1 günstige Möglichkeiten, was insbesondere bei den beengten Platzverhältnissen beim Einsatz in einem Brennstoffzellensystem für ein Kraftfahrzeug zum Tragen kommt, da hier andere Komponenten relativ dicht an dem Zwei-Rohr-Brenner 1 angeordnet werden können, ohne daß thermische Belastungen und/oder Beschädigungen zu befürchten wären.

Im weiteren Betrieb des Zwei-Rohr-Brenners 1 wird dieser genutzt, um den Brennstoff C, welcher dann dem katalytischen Reaktor 7 zugeführt wird, zu verdampfen. Hierzu wird beispielsweise über ein kurzes Abschalten der Brennstoffzufuhr und/oder ein Aussetzen der Funktion der Zündeinrichtung 8 ein Erlöschen der Flamme erreicht. Danach wird wieder Brennstoff C über die Zerstäubungseinrichtung 6 in den Bereich der Innenkammer 5 eingespritzt. Aufgrund der in den Wandungen des Rohrelements 4 gespeicherten Wärme wird dieser Brennstoff C verdampft, so daß dem katalytischen Reaktor 7 ein Gemisch aus Luft und verdampften Brennstoff zugeführt werden kann.

Um die zur Verdampfung benötigte Energiezufuhr dauerhaft sicherzustellen, kann über eine Ringeindüsung 12 außerdem Abgas D, hier beispielsweise Brennstoffzellenabgas, welches vergleichsweise warm ist, und welches Reste an Brennstoff, beispielsweise Wasserstoff und Restmethanol aufweist, in den Bereich der Außenkammer 3 eingebracht werden. Über entsprechende Bauelemente 13, welche die Oberfläche der Außenwandung des inneren Rohrelements 4 vergrößern, kann die Wärme des Abgases aus dem Bereich der Außenkammer 3 zu dem Bereich der Innenkammer 5 geleitet werden, so daß auch weiterhin eine Verdampfung des über die Zerstäubungseinrichtung 6 in den Bereich der Innenkammer 5 eingebrachten Brennstoffs C stattfindet.

Dieser Effekt kann zusätzlich unterstützt werden, wenn im Bereich der Bauelemente 13, welche beispielsweise als Finnen oder dergleichen ausgebildet sein können, eine katalytische Beschichtung angebracht ist, so daß die in dem durch die Ringeindüsung 12 zugeleiteten Abgas D enthaltenen Brennstoffanteile katalytisch verbrannt werden können und deren Wärme der Verdampfung des Brennstoffs im Bereich der Innenkammer 5 dient. Der verdampfte Brennstoff C wird dann in den Bereich der Ausnehmungen 9 in den die Außenkammer 3 durchströmenden Gasstrom gelangen, so daß nach den statischen Mischelementen 11, auf welche je nach Ausführungsform des Zwei-Rohr-Brenners 1 gegebenenfalls auch verzichtet werden kann, ein vergleichsweise homogenes Gemisch B aus Luft, Abgas und verdampften Brennstoff zu dem katalytischen Reaktor 7 strömen kann.

In einer vorteilhaften Ausgestaltung der Erfindung ist es möglich, innerhalb der Innenkammer 5 ein Metallfaservlies oder eine ähnliche Vorrichtung anzuordnen. Das Metallfaservlies kann beispielsweise in die Innenkammer 5 eingelötet werden. Durch einen solchen Einbau kann die Menge an Brennstoff, die verdampft werden kann, erhöht werden.

Die weiteren Ausführungsformen gemäß Fig. 2 bis Fig. 7 des Zwei-Rohr-Brenners 1 zeigen alternative Ausgestaltungen, insbesondere des Innenrohrs 4, auf welche nachfolgend kurz näher eingegangen werden soll. Die grundlegenden Funktionsweise entspricht dabei immer der in Fig. 1 dargestellten Funktionsweise, wobei auch hier jeweils die weiteren in Fig. 1 beschriebenen Komponenten, wie die Ringeindüsung 12, die Bauelemente 13 usw. jeweils ebenfalls vorhanden sein können, zur Vereinfachung jedoch nicht dargestellt wurden.

Fig. 2 zeigt einen vergleichbaren Aufbau zu Fig. 1, wobei hier lediglich auf die Bauelemente 13 und die Ringeindüsung 12 verzichtet wurde. Grundlegend läßt sich ein derartiger Zwei-Rohr-Brenner 1 als Startbrenner verwenden oder die Verdampfung des zugeführten Brennstoffs C über die Zerstäubungseinrichtung 6 erfolgt durch die von dem Luftstrom A mitgeführte Energie, welche beispielsweise aus der Erwärmung aufgrund einer Kompression oder dergleichen resultieren kann.

Grundlegend ist hier natürlich auch der Einbau zur Beheizung eines Heizkatalysators in dem Bereich eines Abgassystems eines Verbrennungsmotors denkbar, wobei dann der Heizkatalysator den nur in Fig. 1 prinzipmäßig angedeuteten katalytischen Reaktor darstellt. Hier wäre dann jedoch ausschließlich ein Eintrag von thermischer Energie in den katalytischen Reaktor 7 sinnvoll, da ein Verdampfen von Brennstoff C in diesem Fall entfallen könnte.

Fig. 3 zeigt eine weitere Ausführungsform des Zwei-Rohr-Brenners 1, wobei hier das innerer Rohrelement 4 aus einem porösen Material ausgebildet ist. Dies ermöglicht eine zügigere Durchmischung der Abgase der Verbrennung im Bereich der Innenkammer 5 mit der in der Außenkammer 3 strömenden Luft. Zusätzlich kann hier zur Verbesserung der Aufheizung und/oder zum Eintrag von thermischer Energie eine katalytische Beschichtung des porösen Materials des inneren Rohrelements 4 sinnvoll sein.

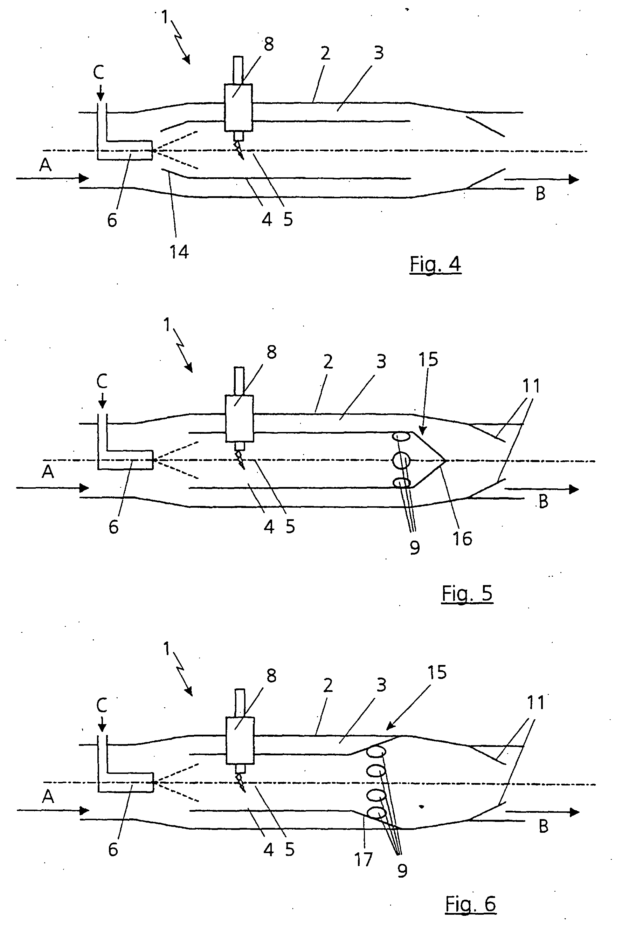

Fig. 4 zeigt eine weitere Ausführungsform welche im Bereich des in die Innenkammer 5 einströmenden Gasstroms eine Querschnittsverengung 14 aufweist. Wie eingangs bereits erwähnt, kann über die in den Bereich der Innenkammer 5 eintretende Luftmenge zusammen mit der durch die Zerstäubungseinrichtung 6 zudosierten Menge an Brennstoff C sichergestellt werden, daß sich in der Innenkammer 5 ein zündfähiges bzw. brennbares Gemisch bildet. Über diese hier dargestellte Querschnittsverengung 14 kann die Menge der in den Bereich der Innenkammer 5 eintretenden Luft im Vergleich zu der Menge der in der Außenkammer 3 strömenden Luft entsprechend beeinflußt werden. Alternativ dazu wäre es auch denkbar, anstatt der hier dargestellten Querschnittsverengung 14 eine Querschnittserweiterung anzubringen.

In Fig. 5 ist eine Variation des Endbereichs 15 des inneren Rohrelements 4 dargestellt. Dieser Endbereich 15 ist der dem hier nicht dargestellten katalytischen Reaktor 7 zugewandte Endbereich des Innenrohrs 4. Neben den aus Fig. 1 bis Fig. 3 bereits bekannten Ausnehmungen 9, welche prinzipiell auch als Querschnittsverengung wirken und die Durchmischung der sie durchströmenden Gase aufgrund des erhöhten Strömungsdruckverlusts fördern, ist der Endbereich 15 des Innenrohrs 4 gemäß Fig. 5 als Kegel 16 ausgebildet. Dieser Kegel 16 ermöglicht eine sehr günstige Strömungsführung der durch die Außenkammer 3 strömenden Gase, so daß es in dem Endbereich 15 bzw. in Strömungsrichtung unmittelbar nach dem Endbereich 15 zu einer Verringerung der Wirbelbildung und damit zu einem insgesamt geringeren Strömungsdruckverlust in dem Zwei-Rohr-Brenner 1 kommt.

Fig. 6 zeigt in einer weiteren Ausführungsform des Zwei-Rohr-Brenners 1 eine Erweiterung 17 des Endbereichs 15 des inneren Rohrelements 4. Je nach Volumenanteile der die Innenkammer 5 bzw. Außenkammer 3 durchströmenden Gasströme kann auch dies eine sinnvolle Ausgestaltung sein, da hierbei die aus dem Bereich der Außenkammer 3 kommenden Gase durch die entsprechenden Ausnehmungen 9 in den Endbereich 15 des Innenrohrs 4 im Bereich der Erweiterung 17 strömen und dann bereits vorgemischt durch die offene Stirnseite des inneren Rohrelements 4 weiterströmen. Hierdurch kann je nach Strömungsverhältnissen in dem Zwei-Rohr-Brenner 1 erreicht werden, daß eine entsprechend gute Vermischung der Teilvolumenströme bereits nach einer sehr kurzen durchströmten Länge stattfindet.

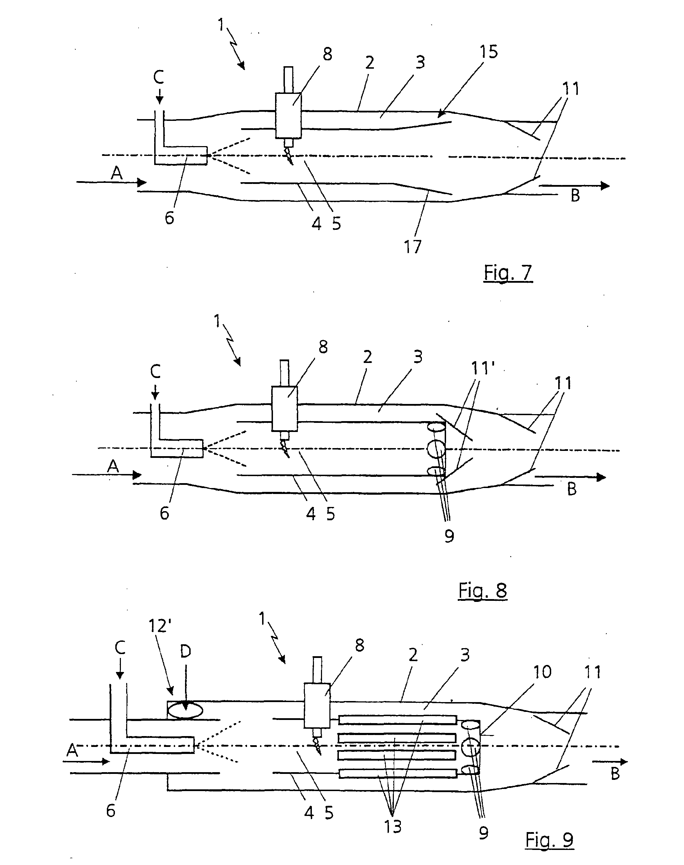

Fig. 7 zeigt eine alternative Form der Querschnittserweiterung 17' des Innenrohrs 4 in dessen Endbereich 15. Hierdurch kann es zu einer Düsenwirkung oder dergleichen kommen, welche ebenfalls eine gute Vermischung der Teilvolumenströme bereits nach einer sehr kurzen durchströmten Länge sicherstellt.

In Fig. 8 ist eine weitere Ausführungsform dargestellt, wobei hier eine deutliche Analogie zu Fig. 1 und Fig. 2 zu erkennen ist. Zusätzlich zu den eingangs beschriebenen statischen Mischelementen 11 sind hier weitere statische Mischelemente 11' unmittelbar im Bereich des Endbereichs 15 des inneren Rohrelements 4 angeordnet, welche die Durchmischung der Gasströme weiter verbessern.

Eine weitere alternative Ausführungsform des Zwei-Rohr-Brenners 1 ist in Fig. 9 dargestellt. Der Aufbau ist dabei prinzipiell analog zu dem Aufbau gemäß Fig. 1 zu verstehen. Lediglich die Ringeindüsung 12 für den Zusatzgasstrom D, welche gemäß einer Ausführungsform wie in Fig. 1 dargestellt sehr viel Bauraum benötigt, ist in Fig. 9 in veränderter Form ausgeführt. Dementsprechend ist in Fig. 9 eine Einrichtung 12' zu Zufuhr eines Zusatzgasstroms D zu erkennen. Die Einrichtung 12' besteht aus einer Kammer 18 und einem in der Kammer 18 angeordneten Innenrohr 19. Der Gasstrom A strömt nun über das Innenrohr 19 in den eigentlichen Zwei-Rohr-Brenner 1 ein. In die Kammer 18 strömt dagegen der Zusatzgasstrom D ein, wobei die Einleitung hier tangential erfolgt. Der Durchmesser des Innenrohrs 19 entspricht wenigstens annähernd dem Durchmesser des Rohrelements 4 des Zwei-Rohr-Brenners 1, welches dessen Innenkammer 5 bildet. Das Bohrelement 4 und das Innenrohr 19 sind jedoch auf einem Abstand zueinander angeordnet, so daß durch das Innenrohr 19 strömende Gase sowohl in den Bereich der Innenkammer 5 als auch in den Bereich der Außenkammer 3 gelangen können. In dem Bereich des Innenrohrs 19 erfolgt außerdem, wie oben bereits beschrieben die Eindüsung des Brennstoffs C.

Durch das tangentiale Einströmen des Zusatzgasstroms D in die Kammer 18, wird bei der Einströmung ein Drall erzeugt, so daß sich in der Kammer 18 eine Randströmung des Zusatzgasstroms D ausbildet. Das Innenrohr 19 dient dabei als Strömungsführung, welche diese Randströmung begünstigt. Eine weitere Beeinflussung der Strömung kann durch eine Aufweitung bzw. eine Verjüngung des Innenrohrs 19 in seinem dem Rohrelement 4 zugewandten Bereich erzielt werden, was hier jedoch nicht dargestellt ist.

Ansonsten ist die Funktionsweise des Zwei-Rohr-Brenners 1 analog zu der oben bereits beschriebenen Funktionsweise zu verstehen, wobei hier durch die spezielle Ausgestaltung der Einrichtung 12' zur Zufuhr des Zusatzgasstroms D ein Aufbau erreicht wird, welcher hinsichtlich seiner Abmessungen sehr kompakt ist und somit hinsichtlich des erforderlichen Bauraums sehr günstig eingesetzt werden kann.

Durch die Randströmung wird außerdem verhindert, daß, falls es sich bei dem Zusatzgasstrom D um inertes Abgas der Brennstoffzelle handelt, kein solches in den Bereich der Innenkammer 5 gelangen kann, in dem die Verbrennung stattfinden soll. Die Verbrennung wird durch eine Durchmischung der beiden Gase so nicht beeinflußt und es kann nicht dazu kommen, daß aufgrund des hohen Inertgasanteils kein zündfähiges Gemisch im Bereich der Innenkammer 5 vorliegt.

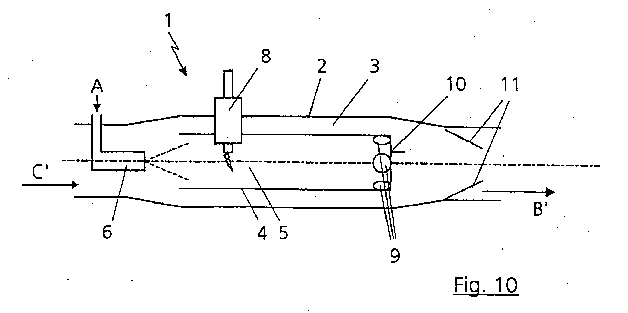

In Fig. 10 ist eine Ausführung des Zwei-Rohr-Brenners 1 dargestellt, welche prinzipiell vergleichbar zu der Ausführung gemäß Fig. 2 aufgebaut ist. Lediglich die verfahrensgemäße Betriebsweise des Zwei-Rohr-Brenners 1 gemäß Fig. 10 unterscheidet sich von der des Zwei-Rohr-Brenners gemäß Fig. 2.

Zur schnellstmöglichen Aufheizung des auch hier nachfolgend angeordneten katalytischen Reaktors 7, welcher in Fig. 10 nicht dargestellt ist, soll auch hier wieder die Flammverbrennung genutzt werden. Bei dem hier dargestellten Ausführungsbeispiel handelt sich bei dem durch den Zwei-Rohr-Brenner 1 strömenden Gasstrom jedoch um einen Reformat- oder Eduktstrom C'. Dieser sauerstoffarme Gasstrom kann beispielsweise Reformat enthalten, welches in dem Gaserzeugungssystem in einem vorgehenden Betriebszyklus erzeugt und dann in einer Speichereinrichtung gespeichert wurde, und/oder der Gasstrom C' kann Edukte enthalten, welche zum Umsatz in dem nachfolgend liegenden Teil des Gaserzeugungssystems vorgesehen sind, also beispielsweise dampfförmiges Methanol oder dergleichen. Der Gasstrom C' enthält damit also wenigstens einen Anteil an Brennstoff, ist jedoch so sauerstoffarm, daß ein zündfähiges Gemisch nicht zu erzielen ist. Daher wird bei dieser Möglichkeit des Betriebsverfahrens über die Zerstäubungseinrichtung 6, welche hier beispielsweise als Lanze oder dergleichen ausgebildet ist, ein sauerstoffhaltiges Medium, insbesondere Luft A, zugeführt.

So entsteht in dem Bereich der Innenkammer 5 ein zündfähiges Gemisch aus der Luft A und dem Reformat-und/oder Eduktstrom C', welcher mit der in der Innenkammer 5 befindlichen Zündeinrichtung 8, beispielsweise einer Zünd- oder Glühkerze gezündet werden kann. Durch die Aufteilung in Innenkammer 5 und Außenkammer 3 kommt es im Bereich der Innenkammer 5 zu einer Verringerung der Strömungsgeschwindigkeit, so daß sich in der Innenkammer 5 eine stabile Flamme ausbilden kann. Die Verbrennung in der Innenkammer 5 kann dabei sowohl unterstöchiometrisch als auch überstöchiometrisch ablaufen. Die dafür erforderliche Menge an Sauerstoff bzw. Luft A kann über die Zerstäubungseinrichtung 6 bzw. Lanze entsprechend eindosiert werden.

Durch die Vermischung der Flamme bzw. ihrer Abgase mit dem durch die Außenkammer 3 strömenden Teil des Gasstroms kommt es zu einer Vermischung der beiden Gasströme miteinander, so daß eine für den katalytischen Reaktor 7 moderate Eintrittstemperatur erreicht werden kann, welche im allgemeinen deutlich unter der Abgastemperatur der offenen Flamme liegt.

Aufgrund der Umströmung des heißen Rohrelements 4, welches die Innenkammer 5 umgibt, durch den kalten Teil des Gasstroms wird der Wärmeverlust des Zwei-Rohr-Brenners 1 an sich minimiert und eine thermische Belastung benachbarter Komponenten kann auch in sehr kompakt ausgebildeten Systemen, in welchen der Zwei-Rohr-Brenner 1 eingesetzt wird, unterbunden werden.

Wie bereits erwähnt, kann die Zündung der Flamme über die Zündeinrichtung 8 erfolgen, wobei diese entweder als Glühkerze oder als Zündkerze ausgebildet sein kann. Beim Zünden der Flamme mit Hilfe einer Zündkerze entsteht ein System, welches ohne Verzögerung startet, während bei der Verwendung einer Glühkerze erst eine gewisse Vorglühzeit abgewartet werden müßte.

Selbstverständlich sind sämtliche Ausführungsformen und dargestellte konstruktive sowie verfahrensgemäße Maßnahmen soweit möglich kombinierbar, so daß die gewünschten Eigenschaften des Zwei-Rohr-Brenners 1 über entsprechende Kombinationen von Querschnittserweiterungen 17 und 17', Kegeln 16, Querschnittsverengungen 9 und 14, Bauelemente 13, Ringeindüsung 12, der Einrichtung 12' und dergleichen erreicht werden können. Jede der erzielbaren Bauformen des Zwei-Rohr-Brenners 1 kann dann mit jedem der möglichen Verfahren betrieben werden.

## Patentansprüche

1. Verfahren zur Zufuhr von Brennstoff und/oder thermischer Energie in einen zu einem katalytischen Reaktor (7) strömenden Gasstrom, wobei der Gasstrom zu einem Teil eine Außenkammer (3) und zu einem Teil eine dazu in Richtung der Strömung zumindest teilweise offen ausgebildete Innenkammer (5), welcher ein Brennstoff zugeführt wird, durchströmt, wobei die Teilströme nach dem Durchströmen der beiden Kammern (3,5) wiedervereinigt und dem katalytischen Reaktor (7) zugeführt werden, wobei in einer Startphase des noch kalten katalytischen Reaktors (7) in der Innenkammer (5) der Brennstoff verbrannt wird.

2. Verfahren nach Anspruch 1,
**dadurch gekennzeichnet, daß**
bei bestimmungsgemäßem Normalbetrieb des warmen katalytischen Reaktors (7) der Brennstoff in der Innenkammer (5) verdampft wird.

3. Verfahren nach Anspruch 1,
**dadurch gekennzeichnet, daß**
in der Startphase der Brennstoff und der durch die Innenkammer (5) strömende Teil des Gastroms ein zündfähiges Gemisch bilden, welches über eine Zündeinrichtung (8) gezündet wird.

4. Verfahren nach Anspruch 1, 2 oder 3,
**dadurch gekennzeichnet, daß**
als Gasstrom zumindest teilweise Luft genutzt wird.

5. Verfahren nach Anspruch 1, 2, 3 oder 4,
**dadurch gekennzeichnet, daß**
es bei einer Brennstoffzellenanlage mit einem Gaserzeugungssystem eingesetzt wird.

6. Verfahren zur Zufuhr von thermischer Energie in einen zu einem katalytischen Reaktor (7) strömenden Gasstrom, wobei der Gasstrom zu einem Teil eine Außenkammer (3) und zu einem Teil eine dazu in Richtung der Strömung zumindest teilweise offen ausgebildete Innenkammer (5), welcher ein sauerstoffhaltiges Medium zugeführt wird, durchströmt, wobei die Teilströme nach dem Durchströmen der beiden Kammern (3,5) wiedervereinigt und dem katalytischen Reaktor (7) zugeführt werden, wobei in einer Startphase des noch kalten katalytischen Reaktors (7) in der Innenkammer ein in dem Gasstrom enthaltener Brennstoff mit den zudosierten sauerstoffhaltigen Medium verbrannt wird.

7. Verfahren nach Anspruch 6,
**dadurch gekennzeichnet, daß**
in der Startphase das sauerstoffhaltige Medium und der durch die Innenkammer (5) strömende Teil des Gastroms ein zündfähiges Gemisch bilden, welches über eine Zündeinrichtung (8) gezündet wird.

8. Verfahren nach Anspruch 6 oder 7,
**dadurch gekennzeichnet, daß**
als sauerstoffhaltiges Medium zumindest teilweise Luft genutzt wird.

9. Verfahren nach einem der Ansprüche 6 bis 8,
**dadurch gekennzeichnet, daß**
es bei einer Brennstoffzellenanlage mit einem Gaserzeugungssystem eingesetzt wird.

10. Verfahren nach Anspruch 9,
**dadurch gekennzeichnet, daß**
als Gasstrom zumindest teilweise Edukte genutzt werden, welche dem Gaserzeugungssystem zur Erzeugung des wasserstoffhaltigen Gases zugeführt werden.

11. Verfahren nach Anspruch 9,
**dadurch gekennzeichnet, daß**
als Gasstrom zumindest teilweise eine von einem vorherigen Betrieb des Gaserzeugungssystems stammendes Reformat genutzt wird.

12. Verfahren nach einem der Ansprüche 1 bis 11,
**dadurch gekennzeichnet, daß**
der Brennstoff zumindest teilweise in einer Flammverbrennung verbrannt wird.

13. Verfahren nach einem der Ansprüche 1 bis 12,
**dadurch gekennzeichnet, daß**
zumindest bei warmem katalytischen Reaktor (7) ein Zusatzgasstrom in den Bereich der Außenkammer (3) zudosiert wird.

14. Verfahren nach Anspruch 13,
**dadurch gekennzeichnet, daß**
als Zusatzgasstrom zumindest teilweise ein Abgas der Brennstoffzelle genutzt wird.

15. Verfahren nach Anspruch 14,
**dadurch gekennzeichnet, daß**
in dem Zusatzgasstrom enthaltene Brennstoffe in dem Bereich der Außenkammer (3) katalytisch verbrannt werden.

16. Verfahren nach einem der Ansprüche 1 bis 15,
**dadurch gekennzeichnet, daß**
der Brennstoff über eine Zerstäubungseinrichtung (6) in den Bereich des Eintritts des Gasstroms in die Innenkammer (5) eingebracht wird.

17. Vorrichtung zu Durchführung des Verfahrens nach einem der Ansprüche 1 bis 16,
**dadurch gekennzeichnet, daß**
die Außenkammer (3) und die Innenkammer (5) als zwei ineinander angeordnete Rohrelemente (2,4) ausgebildet sind.

18. Vorrichtung nach Anspruch 17,
**dadurch gekennzeichnet, daß**
die Innenkammer (5) in dem Bereich des Eintritts des Gasstroms in die Innenkammer (5) eine Querschnittsverengung (14) aufweist.

19. Vorrichtung nach Anspruch 17 oder 18,
**dadurch gekennzeichnet, daß**
die Innenkammer (5) in dem Bereich (Endbereich 15) des Austritts des Gasstroms in die Außenkammer (3) eine Querschnittsverengung (Ausnehmungen 9) aufweist.

20. Vorrichtung nach einem der Ansprüche 17 bis 19,
**dadurch gekennzeichnet, daß**
die Innenkammer (5) in den Bereich (Endbereich 15) des Austritts des Gasstroms in die Außenkammer (3) eine Querschnittserweiterung (17) aufweist.

21. Vorrichtung nach einem der Ansprüche 17 bis 20,
**dadurch gekennzeichnet, daß**
Wandungen zwischen der Innenkammer (5) und der Außenkammer (3) aus einem zumindest teilweise porösen Material ausgebildet sind.

22. Vorrichtung nach Anspruch 21,
**dadurch gekennzeichnet, daß**
das poröse Material zumindest teilweise eine katalytische Beschichtung aufweist.

23. Vorrichtung nach einem der Ansprüche 17 bis 20,
**dadurch gekennzeichnet, daß**
ein der Außenkammer (3) zugewandter Bereich von Wandungen der Innenkammer (5) mehrere dessen Oberfläche vergrößernde Bauelemente (13) aufweist.

24. Vorrichtung nach Anspruch 23,
**dadurch gekennzeichnet, daß**
die Bauelemente (13) zumindest teilweise eine katalytische Beschichtung aufweisen.

25. Vorrichtung nach einem der Ansprüche 17 bis 24,
**dadurch gekennzeichnet, daß**
in Durchströmungsrichtung nach der Innenkammer (5) ein statisches Mischelement (11,11') angeordnet ist.

26. Vorrichtung nach einem der Ansprüche 17 bis 25,
**dadurch gekennzeichnet, daß**
die Außenkammer (3) eine Ringeindüsung (12) für einen Zusatzgasstrom aufweist.

27. Vorrichtung nach einem der Ansprüche 17 bis 25,
**dadurch gekennzeichnet, daß**
in Durchströmungsrichtung vor der Aufteilung des Gasstroms auf die Innenkammer (5) und die Außenkammer (3) eine Einrichtung (12') zur Zufuhr eines Zusatzgasstroms vorgesehen ist.

28. Vorrichtung nach Anspruch 27,
**dadurch gekennzeichnet, daß**
die Einrichtung (12') zur Zufuhr des Zusatzgasstromes aus einer Kammer (18) und einem in der Kammer (18) angeordneten Innenrohr (19) besteht, wobei der Zusatzgasstrom tangential in die Kammer (18) einströmt und der Gasstrom durch das Innenrohr (19) strömt.

29. Vorrichtung nach Anspruch 27,
**dadurch gekennzeichnet, daß**
das Innenrohr (19) wenigstens annähernd denselben Durchmesser aufweist wie das Rohrelement (4), welches die Innenkammer (5) bildet, wobei das Rohrelement (4) und das Innenrohr (19) in Strömungsrichtung ein Abstand zueinander aufweisen.

30. Vorrichtung nach Anspruch 28 oder 29,
**dadurch gekennzeichnet, daß**
der Außendurchmesser der Kammer (18) maximal so groß ist wie der Durchmesser den das Rohrelement (2), welches die Außenkammer (3) bildet, aufweist.
